**Europäisches Patentamt**

**European Patent Office**

**Office européen des brevets**

(11) Numéro de publication: **0 015 196**
**B1**

(12) FASCICULE DE BREVET EUROPEEN

(19)

(45) Date de publication du fascicule de brevet:
14.04.82

(21) Numéro de dépôt: 80400216.0

(22) Date de dépôt: 15.02.80

(51) Int. Cl.³: **C 01 F 7/02**, C 01 F 7/44,
B 01 J 20/08, B 01 J 21/04,
C 09 C 1/42

(54) Procédé de fabrication de suspensions aqueuses d'alumine au moins partiellement sous forme de boehmite ultra-fine et leurs applications.

(30) Priorité: 26.02.79 FR 7904809

(43) Date de publication de la demande:
03.09.80 Bulletin 80/18

(45) Mention de la délivrance du brevet:
14.04.82 Bulletin 82/15

(84) Etats contractants désignés:
BE CH DE FR GB IT NL

(56) Documents cités:
FR-A-1 381 282
FR-A-2 046 412
US-A-2 915 365

(73) Titulaire: **RHONE-POULENC INDUSTRIES, 22 Avenue Montaigne, F-75008 Paris (FR)**

(72) Inventeur: **Dupin, Thierry, 7 rue Robert de Luzarches, F-95140 - Garges/Les/Gonesse (FR)**
Inventeur: **Bouge, Gilbert, 11bis, avenue Jalabert, F-30340 - Salindres (FR)**
Inventeur: **Seigneurin, Laurent, 3, avenue du Parc, F-30340 - Salindres (FR)**

(74) Mandataire: **Savina, Jacques et al, RHONE-POULENC RECHERCHES Service Brevets Chimie et Polymères 25, Quai Paul Doumer, F-92408 Courbevole Cedex (FR)**

# Procédé de fabrication de suspensions aqueuses d'alumine au moins partiellement sous forme de boehmite ultra-fine et leurs applications.

La présente invention concerne un procédé de fabrication de suspensions aqueuses d'alumine au moins partiellement sous forme de boehmite ultra-fine, les produits ainsi obtenus et leurs applications.

Il est connu, d'après le brevet français no. 1 261 182, de préparer de la boehmite ultra-fine à partir de dispersions aqueuses d'alumine par chauffage de celles-ci en présence d'un radical d'acide fort monobasique. Un des inconvénients principaux de ce procédé réside dans la nécessité d'utiliser comme source d'alumine des produits, tels que des solutions de chlorure ou de nitrate d'aluminium obtenues à partir d'aluminium métallique, dont la préparation est difficile et peu économique.

Selon le brevet français no. 1 381 282, on connaît également un procédé de préparation d'alumine ultra-fine qui consiste à faire évoluer à une température comprise entre 60 °C et 150 °C une suspension ou un gâteau de gel d'alumine hydratée amorphe obtenue généralement par précipitation en continu d'une solution d'aluminate de soude par l'acide nitrique de telle façon qu'au cours de ladite précipitation le pH soit de 8 à 9. Ce procédé nécessite la mise en œuvre, comme produit de départ, d'un gâteau de gel d'alumine dont la préparation est assez délicate et nécessite de nombreuses étapes (précipitation, filtration, lavage, essorage).

Le procédé selon la présente invention remédie aux inconvénients des procédés décrits ci-dessus et permet notamment de fabriquer de l'alumine au moins partiellement sous forme de boehmite ultra-fine dans des conditions très économiques en partant d'une matière première dont l'accès est très aisé et très bon marché.

Le procédé selon l'invention concerne en effet un procédé de fabrication d'une suspension aqueuse d'alumine au moins partiellement sous forme de boehmite ultra-fine, caractérisé en ce que l'on traite à une température supérieure à 80 °C une poudre d'alumine active présentant une structure mal cristallisée et/ou amorphe dans un milieux aqueux ayant un pH inférieure à 9.

Aus sens de la présente invention, on entend par alumine de structure mal cristallisée une alumine telle que l'analyse aux rayons X donne un diagramme ne présentant qu'une ou quelques raies diffuses correspondant aux phases cristallines des alumines de transition basse température, c'est-à-dire, essentiellement aus phases chi, rho, êta, gamma. On entend par alumine de structure amorphe, une alumine telle que son analyse aux rayons X ne décèle aucune raie caractéristique d'une phase cristalline quelconque.

L'alumine active mise en œuvre selon le procédé de l'invention, est généralement obtenue par déshydratation rapide des hydroxydes d'aluminium tels que la bayérite, l'hydrargillite ou gibbsite, la nordstrandite ou des oxyhydroxydes d'aluminium tels que la boehmite et le diaspore. Cette déshydratation peut être opérée dans n'importe quel appareillage approprié à l'aide d'un courant de gaz chauds. La température d'entrée des gaz dans l'appareillage varie généralement de 400 à 1200 °C environ et le temps de contact de l'hydroxyde ou de l'oxyhydroxyde avec les gaz chauds est généralement compris entre une fraction de seconde et 4–5 secondes.

La surface spécifique, mesurée par la méthode B.E.T., de l'alumine active obtenue par déshydratation rapide d'hydroxydes ou d'oxyhydroxydes d'aluminium varie généralement entre environ 200 et 400 $m^2/g$, le diamètre des particules est généralement compris entre environ 0,1 et 300 microns et, de préférence, entre 1 et 120 microns, la perte au feu d'une telle alumine mesurée par calcination à 1000 °C varie généralement entre environ 3 et 15%, ce qui correspond à un rapport molaire $\dfrac{H_2O}{Al_2O_3}$ compris entre environ 0,17 et 0,85.

Selon un mode de mise en œuvre particulier du procédé selon l'invention, on utilise de préférence une alumine active provenant de la déshydratation rapide d'hydrargillite qui est l'hydroxyde d'aluminium courant du commerce, facilement accessible et très bon marché; une telle alumine active est bien connue de l'homme de l'art, son procédé de préparation a notamment été décrit dans le brevet français no. 1 108 011.

L'alumine active mise en œuvre peut être utilisée telle quelle ou avoir été traitée de façon à ce que sa teneur en soude exprimée en $Na_2O$ soit inférieure à 1000 ppm.

L'alumine active mise en œuvre peut avoir été broyée ou non. Il peut être avantageux de mettre en œuvre de l'alumine active constituée de particules ayant un diamètre compris entre environ 1 et 20 μ.

Selon le procédé de l'invention, la poudre d'alumine active présentant une structure mal cristallisée et/ou amorphe est traitée dans un milieux aqueux présentant un pH inférieur à 9.

Le traitement peut s'opérer en phase vapeur ou en phase liquide. On opère, de préférence, en phase liquide. Par ailleurs, le traitement est conduit sous agitation.

Le milieu aqueux utilisé peut être constitué par l'eau et/ou par tout acide et/ou sel qui se dissocie dans l'eau, en libérant un anion pour donner une solution ayant un pH inférieur à 9; l'anion est de préférence monovalent.

Les acides mis en œuvre peuvent être des acides forts ou des acides faibles, solubles dans l'eau. Ils peuvent être minéraux ou organiques, parmi les acides organiques, les acides monocarboxyliques, dicarboxyliques et halogénés, solubles dans l'eau, conviennent également aux fins de l'invention. On peut notamment mettre en

œuvre: l'acide nitrique, l'acide perchlorique, l'acide sulfurique, l'acide chlorhydrique, l'acide iodique, l'acide bromhydrique, les acides formique, acétique, propanoïque, butanoïque, oxalique, maléïque, succinique, glutarique, les acides chloro et bromoacétiques.

Parmi les sels que l'on peut mettre en œuvre selon l'invention, on citera ceux comportant les anions nitrate, chlorure, formiate, acétate, oxalate, carbonate, et notamment les nitrates d'ammonium, de sodium, d'aluminium, l'acétate d'ammonium, le chlorure d'ammonium, le formiate d'ammonium, les carbonates d'ammonium.

Les acides et/ou les sels peuvent être utilisés seuls ou en mélange entre eux.

La concentration en alumine dans le milieux aqueux, exprimée en $Al_2O_3$, est inférieure à environ 50% en poids et, de préférence, comprise entre 2 et 20%.

Le rapport des concentrations molaires entre l'anion et l'alumine peut varier dans de larges limites, un rapport inférieur à 6 convient généralement, toutefois, on préfère un rapport inférieur à 3.

La température de traitement est supérieure à environ 80 °C et, de préférence supérieure à 100 °C et plus particulièrement comprise entre 120 et 225 °C et, spécialement entre 130 et 180 °C. Le traitement est effectué, de préférence, à reflux ou dans un autoclave pour éviter les départs de réactifs et d'eau. Dans ces conditions, la pression est supérieure à la pression atmosphérque, et, de préférence, comprise entre 1 et 25 bars, et plus particulièrement entre 2,5 bars et 10 bars.

Le temps de réaction doit être suffisant pour que se développe, au moins partiellement, la boehmite ultra-fine dans les conditions de milieu et de température données. Ce temps varie généralement entre environ 30 minutes et 70 heures et, plus particulièrement, entre 1 et 24 heures. Il peut être noté que ce temps peut être raccourci quand la température augmente. La température et le temps de réaction influent notamment sur le taux de boehmite ultra-fine obtenu.

Selon le procédé de l'invention, on obtient une suspension aqueuse d'alumine au moins partiellement sous forme de boehmite ultra-fine; de préférence 5 à 100% de poudre d'alumine active est convertie en boehmite ultra-fine, plus particulièrement de 40 à 100% et encore plus particulièrement de 60 à 100%.

La partie cristallisée de cette alumine peut être caractérisée par diffraction X (dans tout ce qui suit les axes cristallographiques de référence sont ceux donnés par B.C. Lipens, thèse Delft. 1961) et par la microscopie électronique à haute résolution comme étant de la boehmite ultra-fine.

Selon les condition de mise en œuvre du procédé de l'invention, les boehmiters ultra-fines obtenues sont constituées de monocristaux dont les morphologies dominantes, détectées par les diagrammes Debye-Scherrer, peuvent évoluer des formes fibrillaires aux formes lamellaires.

Les diagrammes Debye-Scherrer des boehmites ultra-fines filbrillaires, suivis de microdensitométrages sur (002), montrent que le produit est une boehmite présentant des monocristaux développés essentiellement dans une seule direction cristallographique dont la forme peut évoluer des lattes longues et étroites (réflexions (020) et (125) très atténuées, (105) normalement intense) jusqu'aux lattes longues et très étroites (réflexions (hkl) absentes, halo (012) et réflexion nette (200)). La direction d'allongement des monocristaux est celle des chaines polymériques doubles imaginées pour la boehmite bien cristallisée et correspondrait à l'axe a. Suivant cette direction, les monocristaux ont des dimensions comprises entre environ 500 et 5000 Å (méthode de Warren et méthode B.E.T.) et suivant les deux autres directions cristallographiques, les dimensions sont approximativement comprises entre 10 et 100 Å (estimées d'après les résultats de la méthode B.E.T.).

Le diagramme de microdiffraction électronique des boehmites ultra-fines fibrillaires est caractéristique d'un produit souvent orienté par accolement des fibrilles en faisceaux (ou fibres).

Ces boehmites ultra-fines fibrillaires séchées à 110 °C présentent des surfaces spécifiques comprises entre environ 50 et 600 $m^2/g$ (mesurées par la méthode B.E.T.).

Le diagramme Debye-Scherrer des boehmites ultra-fines lamellaires fait apparaitre de nombreuses réflexions caractéristiques d'un faciès tabulaire présentant encore le clivage (002) correspondant aux plans d'oxydriles de la boehmite bien cristallisée sous forme de:
– plaquettes rhombiques (réflexions (002) et (105) partiellement éteintes, (008) totalement éteinte),
– plaquette rhombiques allongées probablement suivant la direction (110) (doublet (020), (105) non résolu, réflexions (002) et (008) normalement intenses),
– lattes longues et élargies (réflexions (002) partiellement éteinte, (008) et (105) totalement éteintes).

Par ailleurs, la méthode de Warren appliquée à ces boehmites ultra-fines lamellaires montre que les cristallites présentent au moins deux dimensions de croissance, comprises entre environ 100 et 5000 Å, l'épaisseur des cristallites constituant la troisième dimension étant généralement plus faible et environ comprise entre 20 et 100 Å.

Les boehmites ultra-fines lamellaires séchées à 110 °C présentent des surfaces spécifiques comprises entre environ 50 et 300 $m^2/g$ (mesurées par la méthode B.E.T.).

Sans limiter la présente invention à la théorie, on peut penser que la forme des monocristaux de la boehmite ultra-fine obtenue peut être influencée notamment par la quantité d'anions adsorbée sur les différents plans cristallins et par la température de traitement.

Ainsi, d'une manière générale, on peut penser qu'à température constante, lorsque le pH du milieu de traitement diminue et que le rapport des concentrations molaires entre l'anion et l'alumine augmente la forme des monocristaux de la boehmite ultra-fine obtenue évolue des formes lamellaires aux formes fibrillaires décrites ci-dessus.

Par exemple, dans le cas particulier d'un traitement en milieu nitrate à pH inférieur à 1,4, et un rapport des concentrations molaires entre l'anion et l'alumine supérieur à 0,3, la forme des boehmites obtenues est entièrement fibrillaire, les monocristaux étant essentiellement sous forme de lattes longues et étroites; pour un pH de traitement de 7 (eau) et un rapport des concentrations molaires entre l'anion et l'alumine nul, la forme des boehmites obtenues est entièrement lamellaire, les monocristaux étant essentiellement sous forme de plaquettes rhombiques.

Par ailleurs, d'une manière générale, on peut penser qu'à pH et rapport des concentrations molaires entre l'anion et l'alumine constants, l'augmentation de la température provoque le grossissement des cristaux dans les diverses directions cristallographiques. Plus précisément, pour les boehmites ultra-fines lamellaires, l'épaisseur des monocristaux augmente lorsque la température augmente, les deux autres dimensions de croissance augmentant de façon peu sensible. Pour les boehmites ultra-fines fibrillaires, l'augmentation de la dimension des monocristaux suivant la direction de l'axe a est sensible lorsque la température augmente; suivant les deux autres directions cristallographiques, on évolue, lorsque la température augmente, des lattes longues très étroites aux lattes longues et étroites puis, aux lattes longues et élargies des boehmites lamellaires.

Les produits à base d'alumine obtenus par séchage de la suspension du procédé de l'invention présentent une surface spécifique comprise entre environ 50 et 600 m$^2$/g. Le séchage peut être effectué par tout moyen et, en particulier, à l'étuve, dans un sécheur en lit fluïde, dans un atomiseur. Pour les produits, constitués d'alumine au moins partiellement sous forme de boehmite ultra-fine fibrillaire, le séchage peut être effectué de façon bien connue de l'homme de l'art en effectuant une distillation azéotropique après dispersion dans un milieu organique.

L'analyse du produit obtenu après séchage de la suspension et calcination à 600 °C permet de déceler l'existence d'alumine de transition de structure gamma, caractéristique de filiation boehmitique.

Les produits obentue après séchage et calcination à une température comprise entre environ 500 et 1100 °C contiennent notamment au moins l'une des phases de l'alumine prise dans le groupe constitué par gamma, delta, thêta.

Les produits obtenus après séchage et calcination à une température supérieure à 1100 °C contiennent notamment de l'alumine alpha.

Les applications des suspensions obtenues selon le procédé de l'invention, éventuellement après séchage et éventuellement calcination, sont celles habituellements décrites pour les produits de filiation boehmitique ultra-fins. Parmi celles-ci, on peut citer notamment les applications en temps que charge, liant, épaississant, dispersant, agent filmogène, renforçateur, membrannes, matière de base pour supports de catalyseurs.

Les exemples suivants illustrent l'invention sans en limiter la portée.

Exemple 1

On utilise comme alumine de départ une alumine active obtenue par déshydratation rapide d'hydrargillite dans un réacteur à envolement à l'aide d'un courant de gaz chauds dont la température d'entrée est d'environ 800 °C, le temps de contact est d'environ ½ seconde. Cette alumine présente une surface spécifique de 300 m$^2$/g, une perte au feu de 4%, le diagramme de rayons X donné à la figure 1, montre qu'il s'agit d'une alumine de structure mal cirstallisée présentant notamment des raies diffuses vers 2,40 Å et 1,40 Å communes aux alumines de transition gamma, êta, chi. La dimension des particules est telle que 70% ont un diamètre inférieur à 17 microns.

On introduit 50 g de cette alumine dans un autoclave contenant 1 litre d'eau distillée, présentant un pH de 7 (dans cet exemple, la quantité d'anion introduite est nulle). L'autoclave est agité. On chauffe pendant 5 h à 135 °C.

On obtient une suspension d'alumine contenant de la boehmite ultra-fine entièrement sous forme lamellaire avec un taux de transformation d'environ 35%. L'examen au microscope électronique à transmission de cette suspension (figure 2) montre qu'il s'agit, pour la partie cristallisée, de boehmite ultra-fine entièrement sous forme lamellaire composée de plaquettes rhombiques dont l'épaisseur est d'environ 50 Å et dont les deux autres dimensions sont comprises entre environ 800 et 2500 Å.

La surface spécifique du produit obtenu après séchage de la suspension à l'étuve à 110 °C pendant 3 heures est d'environ 270 m$^2$/g.

Après calcination à 600 °C du produit séché, l'alumine obtenue contient de l'alumine sous forme gamma tétragonale et sa surface spécifique est d'environ 240 m$^2$/g.

Exemple 2

On introduit 50 g de l'alumine active telle que définie à l'exemple 1 dans un autoclave contenant 1 l d'une solution aqueuse de nitrate d'ammonium présentant un pH de 5,4 de telle façon que le rapport molaire $\dfrac{NO_3}{Al_2O_3}$ soit égal à 0,3. L'autoclave est agité. On chauffe 24 heures à 150 °C.

On obtient une suspension d'alumine contenant de la boehmite ultra-fine entièrement sous forme lamellaire avec un taux de transformation d'environ 70%.

L'examen au microscope électronique à transmission de cette suspension (figure 3) montre qu'il s'agit pour la partie cristallisée de boehmite ultra-fine entièrement sous forme lamellaire composée de plaquettes rhombiques dont l'épaisseur est d'environ 50 Å et dont les deux autres dimensions sont comprises entre environ 1500 et 2000 Å.

La surface spécifique du produit obtenu après séchage de la suspension à l'étuve à 110 °C pendant 3 heures est d'environ 160 m²/g.

Après calcination à 600 °C du produit séché, l'alumine obtenue contient de l'alumine sous forme gamma tétragonale et sa surface spécifique est d'environ 140 m²/g.

Exemple 3

On introduit 50 g de l'alumine active telle que définie à l'exemple 1 dans un autoclave contenant 1 l d'un mélange équimolaire d'acide nitrique et de nitrate d'ammonium présentant un pH de 1,38 de telle façon que le rapport molaire $\dfrac{NO_3}{Al_2O_3}$ soit égal à 0,3. L'autoclave est agité. On chauffe 24 heures à 150 °C.

On obtient une suspension d'alumine contenant de la boehmite ultra-fine entièrement sous forme lamellaire avec un taux de transformation d'environ 60%.

L'examen au microscope électronique à transmission de cette suspension (figure 4) montre qu'il s'agit pour la partie cristallisée de boehmite ultra-fine entièrement sous forme lamellaire composée de lattes longues et élargies dont l'épaisseur est d'environ 40 Å dont la longueur varie entre 2000 et 3000 Å et dont la largeur varie entre 150 et 200 Å. Par ailleurs on peut observer en haut de la photographie un résidu de produit du départ.

La surface spécifique du produit obtenu après séchage de la suspension à l'étuve à 110 °C pendant 3 heures est d'environ 200 m²/g.

Après calcination à 600 °C du produit séché, l'alumine obtenue contient de l'alumine sous forme gamma tétragonale et sa surface spécifique est d'environ 175 m²/g.

Exemple 4

On introduit 50 g de l'alumine active telle que définie à l'exemple 1 dans un autoclave contenant 1 l d'une solution aqueuse d'acide nitrique présentant un pH de 0,85 de telle façon que le rapport molaire $\dfrac{NO_3}{Al_2O_3}$ soit égal à 0,3. L'autoclave est agité; on chauffe 29 h à 130 °C.

On obtient une suspension d'alumine contenant de la boehmite ultra-fine entièrement sous forme fibrillaire avec un taux de transformation d'environ 40%.

L'examen au microscope électronique à transmission de cette suspension (figure 5) montre qu'il s'agit pour la partie cristallisée de boehmite ultra-fine entièrement sous forme fibrillaire composée de lattes longues et étroites dont la longueur est d'environ 2000 à 3000 Å et dont les deux autres dimensions sont comprises entre environ 20 et 50 Å.

La surface spécifique du produit obtenu après séchage de la suspension à l'étuve à 110 °C pendant 3 heures est d'environ 300 m²/g.

Après calcination à 600 °C du produit séché, l'alumine obtenue contient de l'alumine sous forme gamma et sa surface spécifique est d'environ 250 m²/g.

Exemple 5

On utilise la même poudre d'alumine active de départ que celle décrite à l'exemple 1, puis on opère le traitement à l'autoclave de cette alumine active dans différentes contitions en présence de différents milieux selon le mode opératoire général décrit dans les exemples 1 à 4.

Les différentes conditions et les résultats obtenus sont rassemblés dans le tableau 1 ci- après:

Tableau 1

0 015 196

| Essais n° | Milieu | pH | $c_{alumine}$ en % | $\frac{c_{anion}}{c_{alumine}}$ | Température en °C | Temps en H | Taux de transformation en % | Cristallites Largeur en Å | Longueur en Å | Epaisseur en Å | Surface spécifique après séchage à 150 °C en m²/g |
|---|---|---|---|---|---|---|---|---|---|---|---|
| 1 | $HNO_3$ | 0,87 | 5 | 0,3 | 130 | 2 | 12 | 50–75 | 800–1200 | 30 | 306 |
| 2 | $HNO_3$ | 0,87 | 5 | 0,3 | 130 | 29 | 37 | 50–75 | 2000–3000 | 40 | 304 |
| 3 | $HNO_3$ | 0,86 | 5 | 0,3 | 150 | 2 | 23 | 50–75 | 1500–2000 | 40 | 315 |
| 4 | $HNO_3$ | 0,86 | 5 | 0,3 | 150 | 29 | 75 | 100–150 | 2000–3000 | 60 | 182 |
| 5 | $HNO_3$ | 0,82 | 5 | 0,5 | 170 | 0,5 | 29 | 50–75 | 1800–2000 | 30 | 296 |
| 6 | $HNO_3$ | 0,82 | 5 | 0,5 | 170 | 2 | 44 | 75–100 | 1500–2500 | 50 | 253 |
| 7 | $HNO_3$ | 0,82 | 5 | 0,5 | 170 | 6 | 75 | 100–150 | 2000–3000 | 60 | 191 |
| 8 | $HNO_3\text{-}Al(NO_3)_3$ | 0,84 | 5 | 0,4 | 150 | 21 | 65 | 100–150 | 1500–3000 | 50 | 229 |
| 9 | $HNO_3\text{-}Al(NO_3)_3$ | 0,82 | 5 | 0,6 | 150 | 21 | 70 | 100–150 | 2000–3000 | 60 | 190 |
| 10 | $HNO_3$ | 1,48 | 5 | 0,15 | 150 | 21 | 72 | 200–500 | 2000–3000 | 60 | 198 |
| 11 | $HNO_3$ | 0,73 | 5 | 0,5 | 150 | 21 | 67 | 50–100 | 2000–3000 | 60 | 203 |
| 12 | $HNO_3$ | 0,29 | 5 | 1 | 150 | 21 | 59 | 50–100 | 2000–3000 | 50 | 233 |
| 13 | $HNO_3\text{–}NH_4NO_3$ | 1,38 | 5 | 0,3 | 150 | 21 | 63 | 200–400 | 2000–3000 | 70 | 192 |
| 14 | $HNO_3\text{–}NH_4NO_3$ | 1,55 | 5 | 0,3 | 150 | 21 | 54 | 600–800 | 1500–2000 | 80 | 213 |
| 15 | $HNO_3\text{–}NH_4NO_3$ | 1,66 | 5 | 0,3 | 150 | 2 | 51 | 800–1500 | 1500–2000 | 80 | 216 |
| 16 | $HNO_3$ | 1,26 | 2 | 0,3 | 150 | 21 | 70 | 150–300 | 2000–3000 | 60 | 206 |
| 17 | $HNO_3$ | 0,59 | 10 | 0,3 | 150 | 21 | 70 | 50–100 | 2000–3000 | 60 | 214 |
| 18 | $HNO_3$ | 0,87 | 2 | 0,3 | 150 | 21 | 60 | 50–100 | 2000–3000 | 60 | 210 |
| 19 | $CH_3COOH$ | 3,02 | 5 | 0,08 | 150 | 21 | 68 | 800–1500 | 1500–2500 | 110 | 173 |
| 20 | $CH_3COOH$ | 2,95 | 5 | 0,15 | 150 | 21 | 65 | 800–1500 | 1500–2500 | 90 | 198 |
| 21 | $CH_3COOH$ | 2,90 | 5 | 0,3 | 150 | 21 | 57 | 600–1000 | 2000–3000 | 70 | 203 |
| 22 | $CH_3COOH$ | 2,77 | 5 | 1 | 150 | 21 | 71 | 300–400 | 2000–2500 | 70 | 180 |
| 23 | $HNO_3\text{*–}CH_3COOH$ | 1,76 | 5 | 0,04* +0,17 | 150 | 21 | 58 | 800–1200 | 2000–4000 | 60 | 218 |
| 24 | $HNO_3\text{*–}CH_3COOH$ | 1,38 | 5 | 0,1* +0,17 | 150 | 21 | 61 | 100–300 | 1500–3000 | 60 | 195 |
| 25 | $(COOH)_2$ | 1,14 | 5 | 0,05 | 150 | 21 | 23 | 100–300 | 1000–5000 | 50 | 268 |
| 26 | $CH_3COONH_4$ | 7,1 | 5 | 0,08 | 140 | 4 | 50 | 1200–1500 | 1500–2000 | 150 | 195 |
| 27 | $NH_4HCO_3$ | 8,9 | 5 | 0,1 | 150 | 21 | 80 | 600–900 | 1000–1500 | 120 | 155 |
| 28 | $CH_3COOH$ | 2,36 | 5 | 2 | 150 | 21 | 100 | 150–200 | 2500–3500 | 90 | 144 |
| 29 | $CH_3COOH$ | 2,36 | 5 | 3 | 150 | 21 | 98 | 100–150 | 2500–3500 | 70 | 165 |

## Revendications

1. Procédé de fabrication d'une suspension aqueuse d'alumine au moins partiellement sous forme de boehmite ultra-fine, caractérisé en ce que l'on traite à une température supérieure à 80 °C, une poudre d'alumine active présentant une structure mal cristallisée et/ou amorphe dans un milieux aqueux ant un pH inférieur à 9.

2. Procédé selon la revendication 1, caractérisé en ce que l'alumine active présente une surface spécifique comprise entre environ 200 et 400 m²/g, en ce que le diamètre des particules est compris entre environ 0,1 et 300 microns et en ce que sa perte au feu, mesurée par calcination à 1000 °C, varie entre environ 3 et 15%.

3. Procédé selon la revendication 2, caractérisé en ce que le diamètre des particules est compris entre 1 et 120 microns.

4. Procédé selon la revendication 3, caractérisé en ce que la poudre d'alumine active est constituée de particules ayant un diamètre compris entre 1 et 20 microns.

5. Procédé selon la revendication 1, 2, 3 ou 4, caractérisé en ce que l'alumine active a été obtenue par déshydratation dans un courant de gaz chauds à une température comprise entre environ 400 et 1200 °C pendant un temps compris entre environ une fraction de seconde 4–5 secondes d'hydroxydes ou d'oxyhydroxydes d'aluminium.

6. Procédé selon la revendication 5, caractérisé en ce que l'hydroxyde d'aluminium est choisie parmi le groupe constitué par la bayérite, l'hydrargillite et la nordstrandite et en ce que l'oxyhydroxyde d'aluminium est choisi parmi le groupe comportant la boehmite et le diaspore.

7. Procédé selon la revendication 6, caractérisé en ce que l'hydroxyde d'aluminium est l'hydrargillite.

8. Procédé selon la revendication 1, caractérisé en ce que l'alumine active a été traitée avant sa mise en suspension dans le milieux aqueux de façon à ce que sa teneur en soude, exprimée en $Na_2O$ soit inférieure à 1000 ppm.

9. Procédé selon la revendication 1, caractérisé en ce que le traitement s'effectue en phase vapeur ou en phase liquide et sous agitation.

10. Procédé selon la revendication 1, caractérisé en ce que le milieu aqueux est constitué par l'eau et/ou par tout acide et/ou sel qui se dissocie dans l'eau en libérant un anion pour donner une solution ayant un pH inférieur à 9.

11. Procédé selon la revendication 10, caractérisé en ce que l'anion est monovalent.

12. Procédé selon la revendication 10, caractérisé en ce que l'acide est au moins un élément du groupe comprenant l'acide chlorhydrique, l'acide nitrique, l'acide perchlorique, l'acide sulfurique, l'acide iodique, l'acide bromhydrique, les acides formique, acétique, propanoïque, butanoïque, oxalique, maléïque, succinique, glutarique, les acides chloro et bromacétiques.

13. Procédé selon la revendication 10, caractérisé en ce que le sel est au moins un élément du groupe constitué par les nitrates d'ammonium, de sodium, d'aluminium, l'acétate d'ammonium, le chlorure d'ammonium, le formiate d'ammonium, les carbonates d'ammonium.

14. Procédé selon la revendication 1, caractérisé en ce que la suspension a une concentration en alumine exprimée en $Al_3O_3$ inférieure à 50% en poids.

15. Procédé selon la revendication 14, caractérisé en ce que la concentration est comprise entre 2 et 20%.

16. Procédé selon la revendication 10, caractérisé en ce que le rapport des concentrations molaires entre l'anion et l'alumine est inférieur à 6 et, de préférence, inférieur à 3.

17. Procédé selon la revendication 1, caractérisé en ce que la température de traitement est comprise entre 120 et 225 °C.

18. Procédé selon la revendication 1, caractérisé en ce que le traitement est effectué à reflux ou dans un autoclave.

19. Les produits à base d'alumine présentant une surface spécifique comprise entre 50 et 600 m²/g et obtenus par séchage de la suspension obtenue selon le procédé de la revendication 1.

20. Les produits à base d'alumine obtenus après séchage de la suspension obtenue selon le procédé de la revendication 1 et calcination à une température supérieure à 550 °C.

21. Application des suspensions selon la revendication 1 et/ou des produits selon la revendication 19 ou 20 en tant que charge, liant, épaississant, dispersant, agent filmogène, renforçateur, membrannes, matière de base pour supports de catalyseurs.

## Patentansprüche

1. Verfahren zur Herstellung einer wässrigen Tonerdesuspension mindestens teilweise in Form von ultrafeinem Böhmit, dadurch gekennzeichnet, dass man ein aktives Tonerdepulver, das eine schlecht kristallisierte und/oder amorphe Struktur aufweist in einem wässrigen Medium mit einem pH-Wert kleiner 9 bei einer Temperatur oberhalb von 80 °C behandelt.

2. Verfahren nach Anspruch 1, dadurch gekennzeichnet, dass die aktive Tonerde eine spezifische Oberfläche zwischen 200 und 400 m²/g aufweist, der Durchmesser der Teilchen zwischen 0,1 und 300 μm liegt und der Glühverlust, gemessen durch Calcinierung bei 1000 °C, zwischen etwa 3 und 15% schwankt.

3. Verfahren nach Anspruch 2, dadurch gekennzeichnet, dass der Durchmesser der Teilchen zwischen 1 und 120 μm beträgt.

4. Verfahren nach Anspruch 3, dadurch gekennzeichnet, dass die aktive Tonerde durch Teilchen mit einem Durchmesser zwischen 1 und 20 μm gebildet wird.

5. Verfahren nach Anspruch 1, 2, 3 oder 4, dadurch gekennzeichnet, dass die aktive Tonerde durch Dehydratation von Aluminiumhydroxiden oder -oxyhydroxiden in einem warmen Gasstrom bei einer Temperatur zwischen 400 und 1200 °C in einer Zeit zwischen dem Bruchteil einer Sekunde und 4 bis 5 Sekunden erhalten wurde.

6. Verfahren nach Anspruch 5, dadurch gekennzeichnet, dass das Aluminiumhydroxid aus der Gruppe ausgewählt ist, die durch Bayerit, Hydrargillit und Nordstrandit gebildet wird und dass das Aluminiumoxyhydroxid aus der Gruppe ausgewählt ist, die Böhmit und Diaspor umfasst.

7. Verfahren nach Anspruch 6, dadurch gekennzeichnet, dass das Aluminiumhydroxid Hydrargillit ist.

8. Verfahren nach Anspruch 1, dadurch gekennzeichnet, dass die aktive Tonerde in der Weise behandelt worden ist, dass ihr Gehalt an Natriumhydroxid, ausgedrückt als $Na_2O$ kleiner 1000 ppm ist.

9. Verfahren nach Anspruch 1, dadurch gekennzeichnet, dass die Behandlung in Gasphase oder einer flüssigen Phase und unter Rühren durchgeführt wird.

10. Verfahren nach Anspruch 1, dadurch gekennzeichnet, dass das wässrige Milieu durch Wasser und/oder jede Säure und/oder Salz gebildet wird, das in Wasser unter Freisetzung eines Anions dissoziiert um eine Lösung mit einem pH-Wert unter 9 zu ergeben.

11. Verfahren nach Anspruch 10, dadurch gekennzeichnet, dass das Anion einwertig ist.

12. Verfahren nach Anspruch 10, dadurch gekennzeichnet, dass die Säure mindestens ein Vertreter aus der Gruppe Salzsäure, Salpetersäure, Perchlorsäure, Schwefelsäure, Jodsäure, Bromwasserstoffsäure, Ameisensäure, Essigsäure, Propionsäure, Buttersäure, Oxalsäure, Maleinsäure, Bernsteinsäure, Glutarsäure, Chlor- und Bromessigsäure ist.

13. Verfahren nach Anspruch 10, dadurch gekennzeichnet, dass das Salz mindestens ein Vertreter der Gruppe ist, die durch die Nitrate von Ammonium, Natrium, Aluminium, durch Ammoniumacetat, Ammoniumchlorid, Ammoniumformiat, Ammoniumcarbonate gebildet wird.

14. Verfahren nach Anspruch 1, dadurch gekennzeichnet, dass die Suspension eine Konzentration an Tonerde, ausgedrückt als $Al_2O_3$ unter 50 Gewichtsprozent aufweist.

15. Verfahren nach Anspruch 14, dadurch gekennzeichnet, dass die Konzentration zwischen 2 und 20% liegt.

16. Verfahren nach Anspruch 10, dadurch gekennzeichnet, dass das Verhältnis der molaren Konzentrationen zwischen dem Anion und der Tonerde kleiner 6 und vorzugsweise kleiner 3 ist.

17. Verfahren nach Anspruch 1, dadurch gekennzeichnet, dass die Behandlungstemperatur zwischen 120 und 225 °C beträgt.

18. Verfahren nach Anspruch 1, dadurch gekennzeichnet, dass die Behandlung unter Rückfluss oder in einem Autoklaven erfolgt.

19. Produkte auf der Basis von Tonerde, die eine spezifische Oberfläche zwischen 50 und 600 $m^2/g$ aufweisen und durch Trocknung der nach dem Verfahren des Anspruchs 1 gewonnenen Suspension erhalten wird.

20. Produkte auf der Basis von Tonerde, die nach Trocknung der nach dem Verfahren des Anspruchs 1 gewonnenen Suspension und Calcinierung bei einer Temperatur oberhalb von 550 °C erhalten werden.

21. Anwendung der Suspensionen nach Anspruch 1 und/oder der Produkte nach den Ansprüchen 19 oder 20 als Füllstoffe, Bindemittel, Verdikkungsmittel, Dispersionsmittel, Filmbildner, Verstärkungsmittel, Membranen, Ausgangsmaterial für Katalysatorträger.

**Claims**

1. Process for the manufacture of an aqueous suspension of alumina at least partially in the form of ultra-fine boehmite, characterised in that a powder of active alumina having a poorly crystalline and/or amorphous structure is treated at a temperature above 80 °C in an aqueous medium having a pH of less than 9.

2. Process according to Claim 1, characterised in that the active alumina has a specific surface area of between 200 and 400 $m^2/g$, in that the diameter of the particles is between about 0,1 and 300 microns, and in that its loss on ignition, measured by calcination at 1000 °C, varies between about 3 and 15%.

3. Process according to Claim 2, characterised in that the diameter of the particles is between 1 and 120 microns.

4. Process according to Claim 3, characterised in that the powder of active alumina consists of particles having a diameter of between 1 and 20 microns.

5. Process according to Claim 1, 2, 3 or 4, characterised in that the active alumina has been obtained by drying aluminium hydroxides or oxyhydroxides in a stream of hot gases, at a temperature between about 400 and 1200 °C, for a period of between about a fraction of a second and 4–5 seconds.

6. Process according to Claim 5, characterised in that the aluminium hydroxide is chosen from amongst the group comprising bayerite, hydrargillite and nordstrandite, and in that the aluminium oxyhydroxide is chosen from amongst the group comprising boehmite and diaspore.

7. Process according to Claim 6, characterised in that the aluminium hydroxide is hydrargillite.

8. Process according to Claim 1, characterised in that the active alumina has been treated so that its soda content, expressed as $Na_2O$, is less than 1000 ppm.

9. Process according to Claim 1, characterised in that the treatment is carried out in the vapour phase or in the liquid phase and with agitation.

10. Process according to Claim 1, characterised in that the aqueous medium consists of water and/or of any acid and/or salt which dissociates in water, releasing an anion, to give a solution having a pH of less than 9.

11. Process according to Claim 10, characterised in that the anion is monovalent.

12. Process according to Claim 10, characterised in that the acid is at least one member of the group comprising hydrochloric acid, nitric acid, perchloric acid, sulphuric acid, iodic acid, hydrobromic acid, formic, acetic, propanoic, butanoic, oxalic, maleic, succinic and glutaric acids, and chloroacetic and bromoacetic acids.

13. Process according to Claim 10, characterised in that the salt is at least one member of the group comprising ammonium, sodium and aluminium nitrates, ammonium acetate, ammonium chloride, ammonium formate and ammonium carbonates.

14. Process according to Claim 1, characterised in that the suspension has an alumina concentration, expressed as $Al_2O_3$, of less than 50% by weight.

15. Process according to Claim 14, characterised in that the concentration is between 2 and 20%.

16. Process according to Claim 10, characterised in that the ratio of the molar concentration of the anion to the molar concentration of the alumina is less than 6 and preferably less than 3.

17. Process according to Claim 1, characterised in that the treatment temperature is between 120 and 225 °C.

18. Process according to Claim 1, characterised in that the treatment is carried out under reflux or in an autoclave.

19. The alumina-based products having a specific surface area of between 50 and 600 m²/g and obtained drying the suspension obtained in accordance with the process of Claim 1.

20. The alumina-based products obtained after drying the suspension obtained in accordance with the process of Claim 1 and calcination at a temperature above 550 °C.

21. Application of the suspensions according to Claim 1, and/or of the products according to Claim 19 or 20, as a filler, a binder, a thickener, a dispersing agent, a film-forming agent, a reinforcing agent, membranes, or a base material for catalyst supports.